# EUROPEAN PATENT SPECIFICATION

(11) **EP 0 386 976 B1**
(45) Date of publication and mention of the grant of the patent: **19.05.1993**
(21) Application number: 90302317.4
(22) Date of filing: 05.03.1990
(51) Int. Cl.: B62B 7/08

(54) **Pushchair**
Kinderwagen
Poussette

(30) Priority: 07.03.1989 GB 8905126
(43) Date of publication of application: 12.09.1990
(73) Proprietor: BRITAX CHILDCARE LIMITED, Wallington Surrey SM6 7AQ (GB)
(72) Inventor: Osborn, David Richard, Hitchin, Hertfordshire SG5 4EG (GB); Robinson, Thomas Keith, Letchworth, Hertfordshire SG6 4YF (GB)
(74) Representative: Hollinghurst, Antony

(56) References cited:
- WO-A-88/02714
- CH-A- 281 310
- US-A- 3 070 385

## Description

This invention relates to a folding pushchair of the type having first, second, third and fourth structural members, the second structural member being pivotally attached to the first structural member for relative angular movement about a first pivot axis, the third structural member being pivotally attached to the first structural member for relative angular movement about a second pivot axis parallel to the first pivot axis, the fourth structural member being pivotally attached to the first structural member for angular movement relative thereto about a third pivot axis, a drive segment being mounted on the first pivot axis fast with the second structural member and coupling means interconnecting the drive segment and the second, third and fourth structural members so that angular movement of the second structural member relative to the first structural member about the first pivot axis causes corresponding angular movement of the third and fourth structural members relative to the first structural member about the second and third pivot axes respectively. A pushchair of this type is disclosed in CH-A-281310.

According to the invention, in a pushchair of the foregoing type, a second drive segment is mounted on the second pivot axis fast with the third structural member, a third drive segment is mounted on the third pivot axis fast with the fourth structural member and the coupling means engages with the second and third drive segments.

The coupling means may comprise a flexible elongate coupling element such as a drive belt or chain.

The second structural member may comprise the pushchair handle and the third and fourth structural members support axles for respective ground-engaging wheels of the pushchair.

WO-A-8802714 discloses a pushchair in which structural members supporting axles for respective ground-engaging wheels of the pushchair carry respective drive segments which are interconected by a drive cable.

An embodiment of the invention will now be described, by way of example, with reference to the accompanying drawings, in which:
Figure 1 is a side view of a pushchair in accordance with the invention in an unfolded position of normal use; and
Figure 2 is a side view, similar to Figure 1, but showing the push chair in a fully folded position.

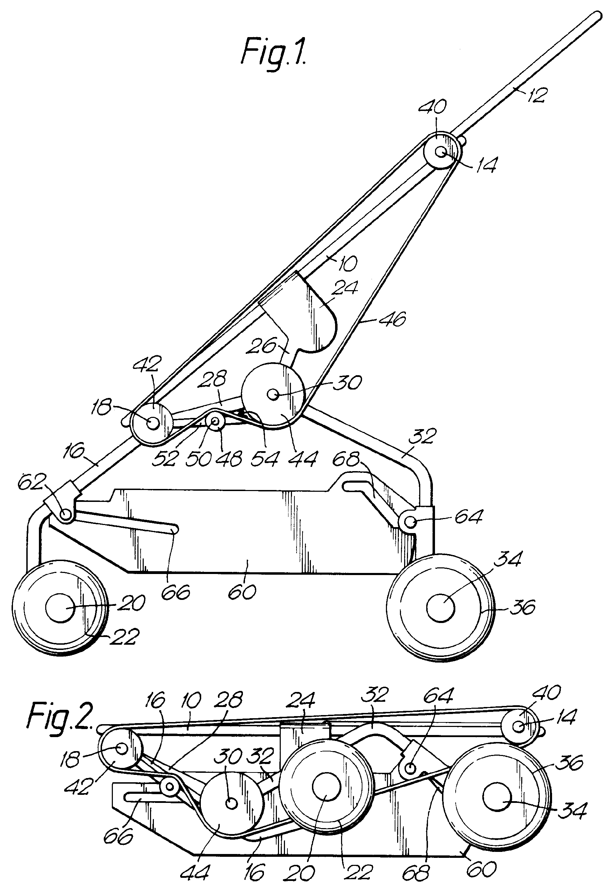

Referring to Figure 1, a pushchair comprises a main structural member 10 which supports a passenger seat (not shown). A handle 12 is pivotally mounted on one end of the structural member 10 for angular movement about a first pivot axle 14.

A front leg 16 is pivotally mounted on the other end of the structural member 10 for angular movement about a second pivot axle 18. The front leg 16 carries an axle 20 supporting a front wheel 22 on its outer end.

A rigid triangular structure, formed by a bracket 24 secured at an intermediate point on the main structural member 10, and two link members 26 and 28, supports a third pivot axle 30 on which is mounted a rear leg 32 having an axle 34 for a rear wheel 36 on its free end.

First, second and third pulleys 40, 42 and 44 are mounted on the first, second and third pivot axles 14, 18 and 30, fast with the handle 12, the front leg 16 and the rear leg 32 respectively. The pulleys 40, 42 and 44 have teeth which engage with complementary teeth formations on a drive belt 46.

An idler pulley 48 is journaled on a pin 50 mounted on an arm 52 which is pivotally mounted on the pivot axle 18. A tension spring 54 biases the pulley 40 into engagement with the outer edge of the belt 46 so as to take up any slack.

When the pushchair is in its position of normal use, as illustrated in Figure 1, the handle 12 is locked in the position illustrated, with the result that the first pulley 40 is held fast with the main structural member 10. However, the idler pulley 48 and spring 54 permit the second pulley 42 to move through a limited angle in the clockwise direction and the third pulley 44 to move through a limited angle in the anti-clockwise direction, so that the spring 54 serves as a shock-absorbing suspension unit in addition to maintaining the required tension in the belt 46.

When the pushchair is to be folded, the locking means resisting angular movement of the handle 12 is released and the handle 12 is pivoted upwardly and forwardly through about 180 deg so as to lie adjacent to the main structural member 10. The relative diameters of the three pulleys 40, 42 and 44 is such that this movement causes the front leg 16 to move through approximately 105 deg and the rear leg 32 to move through approximately 55 deg to the positions illustrated in Figure 2.

It should be understood that the pushchair illustrated in the drawings is symmetrical about its longitudinal vertical central plane. If the pushchair is of the type which folds only about axes perpendicular to this plane, at least the pivot axle 14 preferably extends across the full width of the pushchair in order to ensure that the two sides remain in alignment with one another as the pushchair folds. If the pivot axles 18 and 30 also extend across the full width, then it is necessary to provide a drive belt 46 on one side of the pushchair only. However, it will usually be preferable to provide separate drive belts with separate idler pulleys 48 and tension springs 54 so as to provide independent shock-absorbing suspension means for the two sides.

In the embodiment illustrated, a shopping tray 60 is supported by a front support pin 62 on the front leg 16 and a rear support peg 64 on the rear leg 32. The pins 62 and 64 engage in respective slots 66 and 68 in a side wall of the tray 60, the front slot 66 being straight and the rear slot 68 being Z-shaped as illustrated. These slots permit the tray 60 to be positioned in alignment with the main structural member 10 when the pushchair is in the folded position illustrated in Figure 2 without obstructing the folding movement.

The pulleys 42 and 44 may be replaced by segments extending over only the angular range which is actually engaged by the belt 46. Since the pulley 40 moves through 180 deg and the adjacent runs of the belt 46 are almost parallel to each other, the segment engaged by the belt 46 extends over almost the complete 360 deg and consquently omission of the small unused segment would not be worthwhile.

## Claims

1. A folding pushchair having first, second, third and fourth structural members (10, 12, 16, 32), the second structural member (12) being pivotally attached to the first structural member (10) for relative angular movement about a first pivot axis (14), the third structural member (16) being pivotally attached to the first structural member (10) for relative angular movement about a second pivot axis (18) parallel to the first pivot axis (14), the fourth structural member (32) being pivotally attached to the first structural member (10) for angular movement relative thereto about a third pivot axis (30), a first drive segment (40) being mounted on the first pivot axis (14) fast with the second structural member (12) and coupling means (46) interconnecting the drive segment (40) and the second, third and fourth structural members (12) 16, 32) so that angular movement of the second structural member (12) relative to the first structural member (10) about the first pivot axis (14) causes corresponding angular movement of the third and fourth structural members (16, 32) relative to the first structural member (10) about the second and third pivot axes (18, 30) respectively, characterised in that a second drive segment (42) is mounted on the second pivot axis (18) fast with the third structural member (16), a third drive segment (44) is mounted on the third pivot axis (30) fast with the fourth structural member (32) and the coupling means (46) engages with the second and third drive segments (42, 44).

2. A pushchair according to claim 1, wherein the coupling means (46) comprises a drive belt.

3. A pushchair according to claim 1, wherein the coupling means (46) comprises a drive chain.

4. A pushchair according to claim 1, 2 or 3, wherein the second structural member comprises a pushchair handle (12) and the third and fourth members (16, 32) support axles (20, 34) for respective ground-engaging wheels (22, 36) of the pushchair.

## Patentansprüche

1. Zusammenklappbarer Kinderwagen mit ersten, zweiten, dritten und vierten Bauelementen (10, 12, 16, 32), wobei das zweite Bauelement (12) mit dem ersten Bauelement (10) zum Zwecke einer relativen Winkelbewegung um eine erste Schwenkachse (14) in schwenkbarer Weise befestigt ist, das dritte Bauelement (16) zum Zwecke einer relativen Winkelbewegung um eine zu der ersten Schwenkachse (14) parallel verlaufende, zweite Schwenkachse (18) mit dem ersten Bauelement (10) in schwenkbarer Weise verbunden ist, das vierte Bauelement (32) mit dem ersten Bauelement (10) zum Zwecke einer Winkelbewegung relativ zu diesem um eine dritte Schwenkachse (30) in schwenkbarer Weise befestigt ist, ein fest mit dem zweiten Bauelement (12) verbundenes, erstes Antriebselement (40) auf der ersten Schwenkachse (14) montiert ist, und wobei Kopplungsmittel (46) das Antriebselement (40) und die zweiten, dritten und vierten Bauelemente (12, 16, 32) miteinander verbinden, so daß die Winkelbewegung des zweiten Bauelementes (12) relativ zu dem ersten Bauelement (10) um die erste Schwenkachse (14) eine entsprechende Winkelbewegung der dritten und vierten Bauelemente (16, 32) relativ zu dem ersten Bauelement (10) jeweils um die zweiten bzw. dritten Schwenkachsen (18, 30) hervorruft, **dadurch gekennzeichnet,** daß ein fest mit dem dritten Bauelement (16) verbundenes Antriebselement (42) auf der zweiten Schwenkachse (18) montiert ist, ein fest mit dem vierten Bauelement (32) verbundenes drittes Antriebselement (44) auf der dritten Schwenkachse (30) montiert ist und daß die Kopplungsmittel (46) mit den zweiten und dritten Antriebselementen (42, 44) in Eingriff stehen.

2. Kinderwagen nach Anspruch 1, bei welchem die Kopplungsmittel (46) einen Antriebsriemen aufweisen.

3. Kinderwagen nach Anspruch 1, bei welchem die Kopplungsmittel (46) eine Antriebskette aufweisen.

4. Kinderwagen nach Anspruch 1, 2 oder 3, bei welchem das zweite Bauelement einen Kinderwagen-Handgriff (12) aufweist und die dritten und vierten Elemente (16, 32) Achsen (20, 34) für entsprechende am Boden angreifende Räder (22, 36) des Kinderwagens tragen.

## Revendications

1. Poussette pliante ayant des premier, deuxième, troisième et quatrième éléments structurels (10, 12, 16, 32), le deuxième élément structurel (12) étant fixé de façon pivotante sur le premier élément structurel (10) pour un mouvement angulaire relatif autour d'un premier axe de pivotement (14), le troisième élément structurel (16) étant fixé de façon pivotante sur le premier élément structurel (10) pour un mouvement angulaire relatif autour d'un deuxième axe de pivotement (18) parallèle au premier axe de pivotement (14), le quatrième élément structurel (32) étant fixé de façon pivotante sur le premier élément structurel (10) pour un mouvement angulaire relatif autour d'un troisième axe de pivotement (30), un premier segment d'entraînement (40) étant monté sur le premier axe de pivotement (14) de façon fixe avec le deuxième élément structurel (12) et des moyens de liaison (46) reliant le segment d'entraînement (40) et les deuxième, troisième et quatrième éléments structurels (12, 16, 32) de telle sorte que le mouvement angulaire du deuxième élément structurel (12) par rapport au premier élément structurel (10) autour du premier axe de pivotement (14) entraîne un mouvement angulaire correspondant des troisième et quatrième éléments structurels (16, 32) par rapport au premier élément structurel (10) autour des deuxième et troisième axes de pivotement (18, 30) respectivement, caractérisée en ce qu'un deuxième segment d'entraînement (42) est monté sur le deuxième axe de pivotement (18) de façon fixe avec le troisième élément structurel (16), un troisième segment d'entraînement (44) est monté sur le troisième axe de pivotement (30) de façon fixe avec le quatrième élément structurel (32) et les moyens de liaison (46) viennent au contact des deuxième et troisième segments d'entraînement (42, 44).

2. Poussette selon la revendication 1, dans laquelle les moyens de liaison (46) comprennent une courroie de transmission.

3. Poussette selon la revendication 1, dans laquelle les moyens de liaison (46) comprennent une chaîne de transmission.

4. Poussette selon l'une des revendications 1, 2 ou 3, dans laquelle le deuxième élément structurel comprend une poignée de poussette (12) et les troisième et quatrième éléments (16, 32) supportent des axes (20, 34) pour des roues porteuses respectives (22, 36) de la poussette.
